# EUROPEAN PATENT APPLICATION

(11) **EP 4 679 391 A1**
(43) Date of publication of application: **14.01.2026**
(21) Application number: 24188256.2
(22) Date of filing: 12.07.2024
(51) Int. Cl.: G07C 9/00

(54) **ELECTRONIC LOCK COMPRISING INTERFACE CIRCUITRY AND A MICROCONTROLLER**

(71) Applicant: ASSA ABLOY AB, 107 23 Stockholm (SE)
(72) Inventor: GÜRTLER, Jens, 15834 Rangsdorf (DE)
(74) Representative: Kransell & Wennborg KB

(57) **Abstract**

It is provided an electronic lock (20) comprising interface circuitry (4) and a microcontroller (5); wherein the interface circuitry (4) is configured to dynamically respond to a query signal from a conductively connected electronic key (2), to enable the electronic key (2) to detect presence of the electronic lock (20); wherein the interface circuitry (4) is further configured to decode incoming data from the electronic key (2) for forwarding to the microcontroller (5), and to encode outgoing data from the microcontroller (5) for forwarding to the electronic key (2); wherein the interface circuitry (4) is further configured to control when power is transferred from the electronic key (2) to the microcontroller (5); and wherein the microcontroller (5) is connected to the interface circuitry (4) for communicating with the electronic key (2) and for receiving power from the electronic key (2).

## Description

### TECHNICAL FIELD

The present disclosure relates to the field of electronic locks and in particular to an electronic lock comprising interface circuitry and a microcontroller, and associated method.

### BACKGROUND

Locks have evolved from traditional mechanical locks to electronic locks. Electronic locks are becoming increasingly popular for several reasons, such as flexibility, control and auditing capabilities.

Some electronic locks are based on mobile phones or near field wireless communication. However, the electronic lock needs to be powered. This can be solved by batteries or wired power. Batteries are inconvenient because eventually the batteries run out of power, necessitating battery change or charging. On the other hand, wired power requires a rather complicated and costly installation.

There are also electronic locks that are powered using a conductive connection with an electronic key, where the electronic key comprises a power source, such as a battery. In this way, the electronic does not need its own power source, but is instead relies on being powered by the electronic key.

When the electronic lock is powered by the key there exists a potential vulnerability since there is an exposed conductive interface on the electronic lock.

### SUMMARY

One object is to provide an electronic lock that is less vulnerable to external attacks using unexposed conductive interface.

According to a first aspect, it is provided an electronic lock comprising interface circuitry and a microcontroller. The interface circuitry is configured to dynamically respond to a query signal from a conductively connected electronic key, to enable the electronic key to detect presence of the electronic lock. The interface circuitry is further configured to decode incoming data from the electronic key for forwarding to the microcontroller, and to encode outgoing data from the microcontroller for forwarding to the electronic key. The interface circuitry is further configured to control when power is transferred from the electronic key to the microcontroller. The microcontroller is connected to the interface circuitry for communicating with the electronic key and for receiving power from the electronic key.

The interface circuitry may selectively prevent a conductively connected electronic key from having a direct conductive connection to the microcontroller.

The interface circuitry may be configured to wake up the microcontroller when a valid electronic key is conductively connected to the electronic lock.

The decoding may comprise performing an analogue to digital conversion.

The encoding may comprise encoding data using voltage levels.

The electronic lock may further comprise a rectifier diode, in which case the interface circuitry is configured to bypass the rectifier diode provided external to the interface circuitry when signalled by the microcontroller.

The microcontroller may control the interface circuitry to bypass the rectifier diode for a power transfer period when no data is transmitted between the electronic key 2 and the electronic lock 20.

The electronic lock may further comprise an energy storage device, configured to be charged with sufficient energy from the electronic key to power an actuator for controlling locked/unlocked state of the electronic lock.

The electronic lock may further comprise drive circuitry for driving the actuator, in which case the microcontroller is configured to power up the drive circuitry based on determining that the electronic key is authorised.

The interface circuitry may be further configured to signal to the microcontroller to reduce or stop charging the energy storage device when a voltage supplied by the electronic key falls below a threshold voltage.

The interface circuitry may be further configured to signal to the microcontroller to stop charging the energy storage device when a voltage across the energy storage device exceeds a sufficient charge threshold.

The electronic lock may further comprise analogue encoding and decoding circuitry under control of the interface circuitry.

According to a second aspect, it is provided a method, performed by an electronic lock comprising interface circuitry and a microcontroller. The method comprises: respond dynamically, by the interface circuitry, to a query signal from a conductively connected electronic key, to enable the electronic key to detect presence of the electronic lock; controlling when power is transferred from the electronic key to the microcontroller, wherein the microcontroller is connected to the interface circuitry for communicating with the electronic key and for receiving power from the electronic key; decoding incoming data, by the interface circuitry, from the electronic key and forwarding decoded data to the microcontroller; and encoding outgoing data, by the interface circuitry, from the microcontroller for forwarding to the electronic key.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an electronic key and an electronic lock in an environment in which embodiments presented herein can be applied;
Fig 2 is a schematic circuit diagram illustrating control components of the electronic lock of Fig 1; and
Fig 3 is a flow chart illustrating embodiments of methods performed in the electronic lock.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, an electronic lock is provided. When an electronic key is provided in conductive contact to connect with the electronic lock, the connection is used to receive power from the electronic key, as well as to provide a communication interface between the electronic key and the electronic lock. The electronic lock comprises interface circuitry and a microcontroller. The microcontroller is used for evaluating access, to see if a connected key is authorised to unlock the lock. The interface circuitry is provided between the microcontroller and the connection to the electronic key. In this way, the interface circuitry can be adapted to provide for the specific encoding/decoding for communicating with the key. Moreover, the interface circuitry is used to control when power is transferred from the electronic key to the microcontroller, to prevent an attacker from directly connecting to the microcontroller to somehow manipulate the lock to be set in an unlocked state.

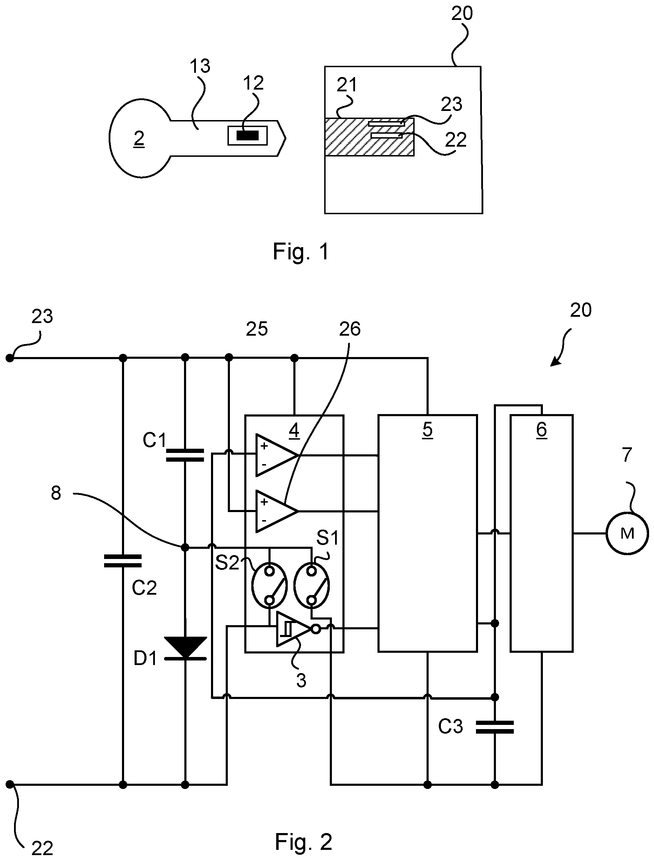

Fig 1 is a schematic diagram illustrating an electronic key 2 and an electronic lock 20 in an environment in which embodiments presented herein can be applied. It is to be noted that the actual layout of the connectors can vary, and the layout shown in Fig 1 is only schematic.

An electronic key 2 comprises a connector 12 and a blade 13, which are electrically insulated from each other. An electronic lock 20 comprises a socket 21 with a first connector 22 and a second connector 23. The first connector 22 is positioned such that, when the electronic key 2 is inserted in the socket 21, the first connector 22 makes a conductive (physical) contact with the connector 12 of the key device. Analogously, the second connector 23 is positioned such that, when the electronic key 2 is inserted in the socket 21, the second connector 23 makes conductive (physical) contact with the blade 13 of the electronic key 2.

This arrangement provides a dual terminal connection between the electronic key 2 and the electronic lock 20, ensuring both effective communication and reliable power transfer. When the electronic key 2 is inserted into the socket 21 of the electronic lock 20, the dual terminal connection facilitates data exchange and supplies the necessary power for the operation of the electronic lock. The communication between the electronic key 2 and the electronic lock 20 allows for the verification of credentials and the execution of lock and unlock commands.

The power transfer from the electronic key 2 to the electronic lock 20 eliminates the need for an internal power source within the lock, thereby reducing maintenance requirements and enhancing the operational efficiency of the electronic lock.

Fig 2 is a schematic circuit diagram illustrating control components of the electronic lock 20 of Fig 1. The first connector 22 and the second connector 23 are here logically shown on the left-hand side of Fig 2. It is to be noted that, in Fig 2, the first connector 22 and the second connector 23 can equally well switch places. The first terminal 22 is used as a line connection (that can vary over time to encoded data) and the second terminal 23 as a V_{dd} connection that is the reference point in this example. Henceforth, reference numeral 22 will also be applied to the term "line connection" and reference numeral 23 will also be applied for the term "V_{dd} connection". Hence, the voltage of the first connector 22, when active, is lower than the voltage of the second connector 23. Optionally, a Schmitt trigger 3 is provided to reliably detect low and high signals on the line connection (the first connector 22 in this case) in relation to V_{dd} (the second connector 23 in this case). The Schmitt trigger 3 translates the analogue signal and provides a valid digital signal (and optionally inverts the signal, indicated by the small circle at the output of the Schmitt trigger in Fig 2) that can be interpreted by the interface circuitry 4 for forwarding to the microcontroller 5.

A first capacitor C1 is provided to stabilise and/or buffer the voltage on the line connection 22 to a buffered voltage supply 8, ensuring consistent signal integrity and reducing noise that may affect the communication between the electronic key 2 and the electronic lock 20.

A second capacitor C2 is provided to filter out any high-frequency noise from the analogue signal, ensuring that the output of the interface circuitry 4 is free from disturbances.

A rectifier diode D1 is provided to charge the first capacitor C1 during powering phases when the voltage at the line connection 22 is lower than the voltage on C1. The rectifier diode D1 prevents a discharging of the first capacitor C1 by the line connection 22 when data is transferred. The rectifier diode D1 can be implemented using a p-n diode, a Schottky diode or any other suitable type of diode.

The electronic lock 20 comprises interface circuitry 4 as well as a microcontroller 5. The interface circuitry 4 can e.g. be provided as a one-time programmable logic chip, programmed to perform functions in accordance with what is described herein. Alternatively, the interface circuitry 4 can be provided using discrete components and/or a one-time programmable logic chip such as a Complex Programmable Logic Device (CPLD) or a Field-Programmable Gate Array (FPGA).

The microcontroller 5 is provided as any suitable microcontroller that is capable to perform the functions in accordance with what is described herein. The microcontroller 5 in itself does not need to be modified for use in the electronic lock 20, as long as the microcontroller 5 can execute instructions with which it is provided to perform the desired functions. The instructions can be stored in memory of the microcontroller 5 itself or external to the microcontroller 5, in which case the instructions can be encrypted for security reasons. The microcontroller 5 can also make use of data when performing its functions, such as data for authentication and/or authorisation of an electronic key.

The interface circuitry 4 is configured to dynamically respond to a query signal from a conductively connected electronic key 2, to enable the electronic key 2 to detect presence of the electronic lock 20. The query signal is transmitted over the pair of connections 22, 23 when the electronic key 2 is connected.

The interface circuitry 4 thereby allows the electronic key 2 to detect the presence of the electronic lock 20 without needing to activate or use the microcontroller 5.

Furthermore, the interface circuitry 4 is configured to decode incoming data from the electronic key 2 (over the pair of connections 22, 23) for forwarding to the microcontroller 5. Conversely, the interface circuitry 4 is also configured to encode outgoing data from the microcontroller 5 for forwarding to the electronic key 2. It is to be noted that the term encoding, when used herein, imply that digital data is encoded using analogue signals in any suitable manner, e.g. using voltage levels. Decoding is used herein for the reverse process, i.e. providing a digital signal based on analogue signals. In this way, the interface circuitry 4 takes care of the specific interface details for communicating with the electronic key 2 and it is sufficient that the microcontroller 5 communicates digitally with the interface circuitry 4 to allow communication between the microcontroller 5 and the electronic key 2. In other words, the microcontroller 5 is connected to the interface circuitry 4 for communicating with the electronic key 2 and also for (selectively) receiving power from the electronic key 2

The decoding can comprise performing an analogue-to-digital conversion.

The encoding comprises encoding data using voltage levels.

The electronic lock 20 can comprise analogue encoding and decoding circuitry under control of the interface circuitry 4.

The interface circuitry 4 can be configured to control when power is transferred from the electronic key 2 to the microcontroller 5. Hence, the interface circuitry 4 can selectively prevent a conductively connected electronic key 2 from having a direct conductive connection to the microcontroller 5.

For instance, the interface circuitry 4 can include a first switch S1 (indirectly or directly) between the buffered voltage supply 8 and the microcontroller 5. When the first switch S1 is in a first state (e.g. blocking state/open state), power is not supplied to the microcontroller 5. When the first switch S1 is in a second state (e.g. conductive/closed state), power is supplied to the microcontroller 5. In other words, the first switch S1 of the interface circuitry 4 controls when power is supplied to the microcontroller 5.

The first switch S1 can be implemented when the interface circuitry 4 is configured, e.g. as one or more suitably configured transistors when programming the interface circuitry 4 in the form the one-time programmable logic chip and/or using one or more discrete components.

Optionally, the interface circuitry 4 determines whether an electronic key 2 is conductively connected to the electronic lock 20. This can be based on the electronic key 2 behaving as expected with respect to its analogue electric components in cooperation with the electronic lock 20. Based on determining that the electronic key 2 is conductively connected to the electronic lock 20, the interface circuitry 4 can be configured to transfer power to the microcontroller 5. In this way, the microcontroller 5 is only powered if the interface circuitry 4 determines that the electronic key 2 is connected.

Optionally, the interface circuitry 4 is configured to wake up the microcontroller 5 when a valid electronic key 2 is conductively connected to the electronic lock 20. The waking up of the microcontroller 5 can be implemented by simply powering up the microcontroller 5, and/or by providing a wake-up/reset signal to the microcontroller 5. Using this structure, with the interface circuitry 4, saves significant amounts of energy, since the interface circuity 4 consumes less energy than a solution based directly on the MCU 5 being connected to the key.

By controlling when power is supplied to the microcontroller 5, an attacker cannot connect to the terminals of the electronic lock 20 and be in conductive contact with the microcontroller 5. By providing the power control of the interface circuitry 4 between the connections 22, 23 and the microcontroller 5, security is greatly improved.

Optionally, the interface circuitry 4 is configured to bypass the rectifier diode D1 provided external to the interface circuitry 4 when signalled by the microcontroller 5. This can e.g. be implemented by a switch S2 in the interface circuitry 4, that is provided with connections on either side of the rectifier diode D1.

The second switch S2 can be implemented when the interface circuitry 4 is configured, e.g. as one or more suitably configured transistors when programming the interface circuitry 4 in the form the one-time programmable logic chip and/or using one or more discrete components.

Optionally, the microcontroller 5 controls the interface circuitry 4 to bypass the rectifier diode D1 (e.g. by closing S2) for a power transfer period. In the power transfer period, no data is transmitted between the electronic key 2 and the electronic lock 20.

An actuator 7 can be provided for setting the electronic lock 20 in a locked state or unlocked state. The actuator can be a motor or a limited movement range actuator. When the actuator 7 is provided, drive circuitry 6 is provided, for controlling the operation of the actuator 7, based on signals from the microcontroller 5. The actuator 7 can e.g. control the state of a pin, latch, bolt, etc. to transition from the locked state to the unlocked state or vice versa.

The power provided from the electronic key 2 might not be sufficient to power the actuator 7 directly. In this case, the electronic lock 20 comprises an energy storage device C3, e.g. in the form of a capacitor, supercapacitor, etc. The microcontroller 5 then controls charging of the energy storage device C3, such that it is charged with sufficient energy from the electronic key 2 to power the actuator 7 for controlling locked/unlocked state of the electronic lock 20. Optionally, the interface circuitry 4 is configured to signal to the microcontroller 5 to stop charging the energy storage device C3 when a voltage across the energy storage device C3 exceeds a sufficient charge threshold. The sufficient charge threshold is set such that when the voltage of the energy storage device C3 exceeds the sufficient charge threshold, there is sufficient energy in the energy storage device to power the actuator 7 for an intended operation. The intended operation can e.g. be to unlock the electronic lock, to lock the electronic lock, or a cycle comprising to both unlock and lock the electronic lock. The sufficient charge threshold can be configured with some margin for the intended operation. The charging state of the energy storage device C3 can be detected using a comparator or analogue-to-digital converter within the microcontroller 5 or a first comparator 25 (provided externally from the microcontroller 5), which compares the potential of one side of the energy storage device against a reference voltage. The second switch S2 is closed when the energy storage device C3 charges to improve efficiency, by bypassing the rectifier diode D1.

Optionally, the microcontroller 5 is configured to power up the drive circuitry 6 based on determining that the electronic key 2 is authorised. In other words, only once the electronic key 2 is determined to be authorised to unlock the lock supplies power to the drive circuitry 6.

Optionally, the interface circuitry 4 is further configured to signal to the microcontroller 5 to reduce or stop charging the energy storage device C3 when a voltage supplied by the electronic key 2 falls below a threshold voltage. The microcontroller 5 can monitor its supply level and detects (directly or indirectly) when the voltage across the connections 22, 23 has fallen below the threshold voltage (e.g. detected by a second comparator 26), and then signals the microcontroller 5 to reduce charging the energy storage device C3. Alternatively, the signal can be provided from the interface circuitry 4 to the microcontroller 5 indicating a measurement of the present voltage across the connections 22, 23, regardless or level. In any case, the microcontroller 5 determines when to reduce (or stop) charging the energy storage device C3 based on the signal from the interface circuitry 4. By using the second comparator 26 for detecting a voltage drop, the microcontroller 5 does not need to perform such a detection. This improves flexibility in selecting the type of microcontroller 5 to use, since it does not need to provide analogue inputs. Moreover, it is more power efficient to apply the second comparator 26 for detecting the voltage drop, compared to using the microcontroller 5, thereby reducing power consumption of the electronic lock 20 even further.

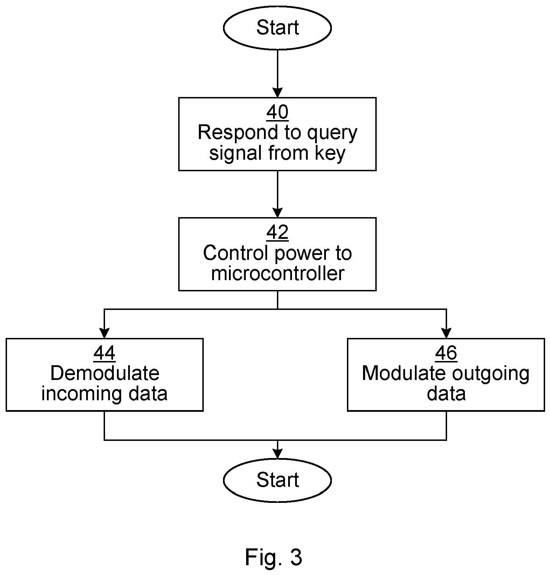

Fig 3 is a flow chart illustrating embodiments of methods performed in the electronic lock 20. This flow chart provides sequence of operations that the electronic lock 20 undergoes to interact with an electronic key 2 and manage its internal functions effectively.

In a *respond to query signal from key* step 40, the interface circuitry 4 dynamically responds to a query signal from a conductively connected electronic key, to enable the electronic key to detect presence of the electronic lock.

In a *control power to the microcontroller* step 42, the interface circuitry 4 controls when power is transferred from the electronic key 2 to the microcontroller 5, wherein the microcontroller 5 is connected to the interface circuitry 4 for communicating with the electronic key and for receiving power from the electronic key,

The power control occurs in any suitable manner in line with what is described above for how the interface circuitry 4 controls power supply to the microcontroller 5.

In a *decode incoming data* step 44, the interface circuitry 4 decodes incoming data from the electronic key and forwards decoded data to the microcontroller 5.

In an *encode outgoing data* step 46, the interface circuitry 4 encodes outgoing data from the microcontroller 5 for forwarding to the electronic key.

It is to be noted that the order in which the decode incoming data step 44 and the encode outgoing data step 46 are performed depends on the direction in which data is provided between the electronic key 2 and the microcontroller 5.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. An electronic lock (20) comprising interface circuitry (4) and a microcontroller (5);
wherein the interface circuitry (4) is configured to dynamically respond to a query signal from a conductively connected electronic key (2), to enable the electronic key (2) to detect presence of the electronic lock (20);
wherein the interface circuitry (4) is further configured to decode incoming data from the electronic key (2) for forwarding to the microcontroller (5), and to encode outgoing data from the microcontroller (5) for forwarding to the electronic key (2);
wherein the interface circuitry (4) is further configured to control when power is transferred from the electronic key (2) to the microcontroller (5);
and wherein the microcontroller (5) is connected to the interface circuitry (4) for communicating with the electronic key (2) and for receiving power from the electronic key (2).

2. The electronic lock (20) according to claim 1, wherein the interface circuitry (4) selectively prevents a conductively connected electronic key (2) from having a direct conductive connection to the microcontroller (5).

3. The electronic lock (20) according to any one of the preceding claims, wherein the interface circuitry (4) is configured to wake up the microcontroller (5) when a valid electronic key (2) is conductively connected to the electronic lock (20).

4. The electronic lock (20) according to any one of the preceding claims, wherein the decoding comprises performing an analogue to digital conversion.

5. The electronic lock (20) according to any one of the preceding claims, wherein the encoding comprises encoding data using voltage levels.

6. The electronic lock (20) according to any one of the preceding claims, further comprising a rectifier diode (D1), wherein the interface circuitry (4) is configured to bypass the rectifier diode (D1) provided external to the interface circuitry (4) when signalled by the microcontroller (5).

7. The electronic lock (20) according to claim 6, wherein the microcontroller (5) controls the interface circuitry (4) to bypass the rectifier diode (D1) for a power transfer period when no data is transmitted between the electronic key 2 and the electronic lock 20.

8. The electronic lock according to any one of the preceding claims, further comprising an energy storage device (C3), configured to be charged with sufficient energy from the electronic key (2) to power an actuator (7) for controlling locked/unlocked state of the electronic lock (20).

9. The electronic lock (20) according to claim 8, further comprising drive circuitry (6) for driving the actuator (7), wherein the microcontroller (5) is configured to power up the drive circuitry (6) based on determining that the electronic key (2) is authorised.

10. The electronic lock (20) according to claim 8 or 9, wherein the interface circuitry (4) is further configured to signal to the microcontroller (5) to reduce or stop charging the energy storage device (C3) when a voltage supplied by the electronic key (2) falls below a threshold voltage.

11. The electronic lock (20) according to any one of claims 8 to 10, wherein the interface circuitry (4) is further configured to signal to the microcontroller (5) to stop charging the energy storage device (C3) when a voltage across the energy storage device (C3) exceeds a sufficient charge threshold.

12. The electronic lock (20) according to any one of the preceding claims, further comprising analogue encoding and decoding circuitry under control of the interface circuitry (4).

13. A method, performed by an electronic lock (20) comprising interface circuitry (4) and a microcontroller (5), the method comprising:
respond (40) dynamically, by the interface circuitry (4), to a query signal from a conductively connected electronic key (2), to enable the electronic key (2) to detect presence of the electronic lock (20);
controlling (42) when power is transferred from the electronic key (2) to the microcontroller (5), wherein the microcontroller (5) is connected to the interface circuitry (4) for communicating with the electronic key (2) and for receiving power from the electronic key (2);
decoding (44) incoming data, by the interface circuitry (4), from the electronic key (2) and forwarding decoded data to the microcontroller (5); and
encoding (46) outgoing data, by the interface circuitry (4), from the microcontroller (5) for forwarding to the electronic key (2).
